# EUROPÄISCHE PATENTSCHRIFT

(11) **EP 3 672 875 B1**
(45) Veröffentlichungstag und Bekanntmachung des Hinweises auf die Patenterteilung: **21.07.2021**
(21) Anmeldenummer: 18768783.5
(22) Anmeldetag: 23.08.2018
(51) Int. Cl.: B65B 9/14, B65B 5/02, B65B 59/00, B65B 51/14, B65G 21/10, B65G 21/14, B65B 35/24, B65B 65/00

(54) **VERPACKUNGSANLAGE UND VERFAHREN ZUM VERPACKEN VON OBJEKTEN**
PACKAGING SYSTEM AND METHOD FOR PACKAGING OBJECTS
DISPOSITIF D'EMBALLAGE ET PROCÉDÉ DESTINÉ À EMBALLER DES OBJETS

(30) Priorität: 23.08.2017 DE 102017119296
(43) Veröffentlichungstag der Anmeldung: 01.07.2020
(73) Patentinhaber: Haver & Boecker OHG, 59302 Oelde (DE)
(72) Erfinder: WENZEL, Holger, 33442 Herzebrock-Clarholz (DE)
(74) Vertreter: BSB Patentanwälte Schütte & Engelen Partnerschaft mbB
(86) Internationale Anmeldenummer: PCT/EP2018/072727
(87) Internationale Veröffentlichungsnummer: WO 2019/038358

(56) Entgegenhaltungen:
- EP-A1- 1 574 433
- EP-B1- 1 597 147
- WO-A1-2016/070883
- WO-A1-2017/009737
- DE-A1-102005 018 543
- GB-A- 1 067 166
- US-A- 3 237 371
- US-A- 4 730 437

## Beschreibung

Die vorliegende Erfindung betrifft eine Horizontalstretchanlage zum Verpacken von wenigstens einem Objekt in einen Foliensack. Dabei umfasst eine solche Horizontalstretchanlage wenigstens einen Schlauchfolienvorrat, wenigstens eine Öffnungsstation und wenigstens zwei Reffbügel zum Aufreffen und spreizen des Foliensacks, welcher aus einem Schlauchfolienabschnitt aus dem Schlauchfolienvorrat gebildet ist. Weiterhin ist wenigstens eine Verschlussstation zum Verschließen des gefüllten Foliensacks vorgesehen. Die Reffbügel sind zwischen einer Sackaufnahmeposition und einer Verpackungsposition verfahrbar.

Im Stand der Technik sind verschiedene Vorrichtungen und Verfahren zum Einpacken von einem oder mehrerer Objekte in Folie bekannt geworden. Dabei ist je nach Anwendungsfall insbesondere das Verpacken von einem oder mehrerer Objekte in Stretchfolie vorteilhaft.

Beispielsweise die EP 1 597 147 B1 beschreibt ein Verfahren und ein System zum Einpacken von Objekten, wobei ein aus Schlauchfolie gebildeter Sack auf sogenannte Reffbügel aufgezogen wird. Die Reffbügel mit dem aufgerefften Sack werden anschließend leicht auseinandergefahren, wodurch der Sack gespreizt bzw. gestretcht wird.

Der aufgereffte und mittels der Reffbügel aufgehaltene Sack wird anschließend zwischen zwei Förderern angeordnet, sodass ein über den ersten Förderer transportiertes Objekt in den geöffneten Sack gefördert wird. Der Sack wird so über das Objekt gezogen und von den Reffbügeln abgerefft.

Anschließend wird der Sack verschweißt und das verpackte Objekt wird mit dem zweiten Förderer abtransportiert.

Nachteilig bei den bekannten Anlagen ist jedoch, dass zwischen den beiden Förderern konstruktiv bedingt in der Regel eine relativ große Lücke vorgesehen werden muss, damit der aufgehaltene Sack in die Förderebene gebracht werden kann, sodass ein Objekt in den Sack transportiert werden kann. Um insbesondere mit nicht ausreichend biegesteifen Objekten eine ausreichende Abstützung des Objekts zwischen den beiden Förderern zu gewährleiten, müssen teilweise sehr aufwendige Konstruktionen vorgesehen werden.

Die Lücke zwischen den Förderern wird umso größer, je länger die zu verpackenden Objekte sind und je mehr Folienlänge auf die Reffbügel aufgezogen werden muss. Hierdurch wird die benötigte Länge der Reffbügel erhöht und somit auch die Lücke zwischen den Förderern vergrößert.

Die WO2016/070883 zeigt eine ähnliche Anlage, wobei zwei Folienvorräte und zwei Baugruppen mit Reffbügeln vorgesehen sind, um die Leistung der Anlage zu steigern.

Nachteilig ist ferner bei den bekannten Anlagen, dass die Maschinen nicht kontinuierlich arbeiten, da das in Folie verpackte Objekt auf dem zweiten Förderer angehalten werden muss, um die offene Seite des Sacks zu verschweißen.

Es ist deshalb die Aufgabe der vorliegenden Erfindung, eine alternative Ausgestaltung einer solchen Anlage zum Verpacken von Objekten bereitzustellen, bei welcher die zuvor beschriebenen Nachteile wenigstens teilweise verbessert werden, insbesondere beim Verpacken von herkömmlich gefüllten Papiersäcken zum Witterungsschutz.

Diese Aufgabe wird gelöst durch eine Horizontalstretchanlage mit den Merkmalen des Anspruchs 1 und durch ein Verfahren mit den Merkmalen des Anspruchs 11. Bevorzugte Weiterbildungen der Erfindung sind Gegenstand der Unteransprüche. Weitere Vorteile und Merkmale der Erfindung ergeben sich aus den Ausführungsbeispielen.

Die erfindungsgemäße Verpackungsanlage bzw. Horizontalstretchanlage zum Verpacken von wenigstens einem Objekt in einen Foliensack umfasst wenigstens einen Schlauchfolienvorrat, wenigstens eine Öffnungsstation, wenigstens zwei Reffbügel zum Aufreffen und spreizen des Foliensacks und wenigstens eine Verschlussstation zum Verschließen des gefüllten Foliensacks. Die Reffbügel sind wenigstens zwischen einer Sackaufnahmeposition und wenigstens einer Verpackungsposition verfahrbar. Dabei ist eine durchgehende Fördereinrichtung mit wenigstens einem Förderelement vorgesehen, auf welcher ein zu verpackendes Objekt in den durch die Reffbügel in der Verpackungsposition aufgehaltenen Foliensack hindurchtransportiert wird. Die Fördereinrichtung umfasst dabei eine Förderebene, wobei wenigstens eine Umlenkeinrichtung vorgesehen ist, welche das Förderelement wenigstens abschnittsweise nach unten aus der Förderebene umlenkt, sodass ein Freiraum in der Förderebene gebildet ist, in welchem wenigstens die Verschlussstation wenigstens abschnittsweise anordenbar ist.

Erfindungsgemäß umfasst die Horizontalstretchanlage wenigstens einen Schlauchfolienvorrat und wenigstens eine Öffnungsstation, wobei insbesondere zwischen dem Schlauchfolienvorrat und der Öffnungsstation wenigstens eine Schweiß- und Schneidstation vorgesehen ist, mittels welcher eine vorbestimmte Länge an Schlauchfolie von dem Schlauchfolienvorrat abgetrennt und an dem einen Ende verschlossen wird. So wird aus einem Stück Schlauchfolie, bevorzugt aus einem Stück Seitenfaltenfolienschlauch, ein an einer Seite geöffneter Foliensack gebildet, welcher mittels der Öffnungsstation an dem offenen Ende geöffnet und an die Reffbügel übergeben wird. Sobald der Foliensack an die Reffbügel übergeben ist, wird dieser auf die aus dem Stand der Technik ansonsten bekannten Reffbügel aufgezogen bzw. aufgerefft.

Die Schweiß- und Schneidstation ist vorzugsweise zwischen dem Schlauchfolienvorrat und der Öffnungsstation vorgesehen, wobei die Schweiß- und Schneidstation eine eigenständige Baugruppe sein kann oder auch dem Schlauchfolienvorrat und/oder der Öffnungsstation zugeordnet sein kann.

Die zuvor genannte Schweiß- und Schneidstation kann an dieser Stelle je nach Ausgestaltung insbesondere dann wegfallen, wenn als Schlauchfolienvorrat vorgefertigte Säcke aus einem Vorrat zugeführt werden, was je nach Ausgestaltung der Anlage bevorzugt ist.

Zum Öffnen des Foliensacks und/oder zum Erzeugen eines einseitig geschlossenen Foliensacks umfasst die Öffnungsstation vorzugsweise zwei Arme bzw. Platten, zwischen welchen die Schlauchfolie von dem Schlauchfolienvorrat hindurch gefördert werden kann.

Die Öffnungsstation umfasst insbesondere an dem den Reffbügeln zugeordneten Ende wenigstens eine Saugeinrichtung und vorzugsweise an beiden Armen bzw. Platten wenigstens einen Sauger bzw. eine Saugeinrichtung, sodass beim Auseinanderfahren der Platten mittels eines Aktors der Foliensack an dem offenen Ende auseinandergezogen bzw. geöffnet wird, sodass er auf die Reffbügel aufgesteckt werden kann.

Erfindungsgemäß umfasst die Horizontalstretchanlage wenigstens zwei Reffbügel. Es ist aber auch möglich, dass mehr Reffbügel vorgesehen sind, beispielsweise vier Stück. Die Reffbügel sind vorzugsweise mit wenigstens einer Rolle zum Auf- bzw. Abreffen der Folie bzw. des Foliensacks ausgestattet. Derartige Reffbügel sind im Stand der Technik umfassend bekannt und eine derartige Ausgestaltung ist bevorzugt.

Insbesondere können die Reffbügel auch wenigstens geringfügig auseinandergefahren werden. Durch das Vergrößern des Abstandes zwischen den Reffbügeln wird der aufgereffte Foliensack wenigstens geringfügig gestretcht. Durch das Stretchen des Foliensacks liegt der Foliensack nachher besonders eng, insbesondre faltenfrei, an dem zu verpackenden Objekt an.

Die Reffbügel sind vorzugsweise an einem Rahmen bzw. in einem Gestell aufgenommen. Dabei sind die Reffbügel bzw. das Gestell bzw. der Rahmen verfahrbar angeordnet, sodass die Reffbügel von der Sackaufnahmeposition in die Verpackungsposition verlagert werden können. Dabei können die Reffbügel insbesondere hoch und/oder runter verfahren werden oder auch seitlich verfahren werden oder verschwenkbar ausgestaltet sein. Es können insbesondere wenn mehrere Folienvorräte vorgesehen sind auch seitliche Bewegungen vorteilhaft eingesetzt werden, sodass beispielsweise links und rechts von der Fördereinrichtung Folienvorräte angeordnet sind und zum Erzielen eines besonders hohen Durchsatzes zwei Gestelle mit Reffbügeln parallel und/oder seriell eingesetzt werden. Ein Rahmen liegt dann vorzugsweise in der Verpackungsposition und der zweite Rahmen mit Reffbügeln befindet sich in der Sackaufnahmeposition, um bereits schon einen neuen Foliensack aufzunehmen bzw. aufzureffen. Bei einem parallelen Einsatz kann der Strom an zu verpackenden Objekten auf zwei Reihen aufgeteilt werden und jeweils zwei Objekte gleichzeitig oder mit kurzem Zeitversatz verpackt werden.

Die Verschlussstation ist erfindungsgemäß insbesondere in Förderrichtung hinter den Reffbügeln angeordnet. Somit ist es insbesondere möglich, dass das in den Foliensack eingeförderte Objekt mittels der Verschlussstation in dem Foliensack eingeschweißt wird. Dazu umfasst die Verschlussstation vorzugsweise wenigstens eine Klemmeinrichtung, um den Sack vorzugsweise möglichst eng anliegend an das in Förderrichtung hintere Stirnende des Objekts anzudrücken und um das offene Ende des Sacks festzuklemmen. Hier kann es insbesondere bei der Verwendung von Seitenfaltenfolie zweckmäßig sein, Seitenfalteneinleger vorzusehen, welche die hochgezogenen bzw. gespannten Seitenfalten im Bereich der geplanten Verschweißung wieder zurücklegen. So kann eine definierte Verschweißung gewährleistet werden. Durch die Klemmeinrichtung wird weiterhin vorzugsweise die beim Abreffen des Foliensacks von den Reffbügeln entstehende Längsspannung weitestgehend erhalten, um ein besonders faltenfreies Anliegen des Foliensacks an dem Objekt zu erreichen. Gleichzeitig wird hierdurch die Schweißnaht von Zugkräften entlastet. Weiterhin umfasst die Verschlussstation vorzugsweise wenigstens eine Schweißstation, um das offene Ende des Foliensacks mit dem eingefügten Objekt zu verschließen. Je nach Ausgestaltung kann auch die Verschlussstation eine Schneidstation umfassen, um überschüssige Folie hinter der Schweißnaht abzutrennen, die dann vorzugsweise einem Recycling zugeführt wird.

Die erfindungsgemäße Horizontalstretchanlage bietet viele Vorteile. Ein erheblicher Vorteil ist, dass durch die erfindungsgemäße Ausgestaltung der Fördereinrichtung ein einziger durchgängiger Förderer für den An- und Abtransport der zu verpackenden Objekte verwendet werden kann. Im Stand der Technik sind in der Regel zwei getrennte Förderer vorgesehen, wobei ein Förderer für den an Transport des Objekts bis in den Foliensack zuständig ist und der zweite Förderer hinter den Reffbügeln angeordnet ist, um das verpackte Objekt abzutransportieren.

Besonders vorteilhaft ist hierbei, dass nur ein Antrieb notwendig ist und dass durch die Ausgestaltung mit nur einem Förderer der An- und der Abtransport absolut synchronisiert sind. Hierdurch können sowohl Kosten eingespart werden als auch ein besonders zuverlässiges Verpacken von Objekten erreicht werden, da der An- und Abtransport mit der gleichen Geschwindigkeit arbeiten.

Die Verwendung eines einzigen durchgehenden Förderers wird dadurch ermöglicht, dass mittels der Umlenkeinrichtung ein Freiraum in der Förderebene geschaffen wird, in welchem je nach Ausgestaltung wenigstens ein Abschnitt der Verschlusseinrichtung angeordnet werden kann.

So können beispielsweise die eine Seite der Klemmeinrichtung und die eine Seite der Schweißeinrichtung bzw. jeweils die untere Baugruppe unterhalb des Foliensacks bzw. unterhalb der Förderebene angeordnet werden. So wird das zu verpackende Objekt in den Sack hineintransportiert und anschließend durch die Verschlussstation hindurch gefördert.

Durch die erfindungsgemäße Ausgestaltung muss nur ein sehr kleiner Freiraum bzw. in Förderrichtung eine sehr kleine bzw. kurze Lücke vorgesehen werden, in welcher die Verschlusseinrichtung angeordnet werden kann.

Dies wird insbesondere dadurch begünstigt, dass je nach Ausgestaltung relativ kurze Reffbügel verwendet werden können, da gemäß der vorliegenden Erfindung insbesondere ein Witterungsschutz für Säcke zur Verfügung gestellt wird. Hier sind geringere Haltekräfte als z. B bei dem Einpacken in Folie als Ladungssicherung notwendig. Dadurch können auch kürzere Reff- und Stretchwege vorgesehen werden, was zudem die Leistung der Anlage erhöht.

Bevorzugt ist der horizontale Abstand der Reffbügel größer als die Breite des Förderelements. Hierdurch wird erreicht, dass die Reffbügel beim Verfahren in die Verpackungsposition wenigstens geringfügig insbesondere seitlich an dem Förderelement vorbei nach unten fahren können, sodass der aufgereffte Foliensack vorzugsweise in direkten Kontakt zu dem Förderelement kommt und insbesondere wenigstens kurzfristig im Wesentlichen straff über das Förderelement gespannt wird, sodass das Objekt leicht in den Foliensack gefördert werden kann.

Besonders bevorzugt weist die Fördereinrichtung wenigstens in dem Bereich der Reffbügel eine gleitende Abtragung auf. Hierunter ist insbesondere zu verstehen, dass unterhalb des Förderelements im Bereich der Reffbügel beispielsweise ein Gleitblech bzw. eine Gleitfläche vorgesehen ist, sodass das Förderelement in diesem Bereich über die gleitende Abtragung rutscht..

In vorteilhaften Weiterbildungen ist die gleitende Abtragung im Wesentlichen federnd gelagert und/oder nachgiebig ausgebildete. Hier ist insbesondere vorgesehen, dass die gleitende Abtragung wenigstens leicht nachgibt bzw. weggedrückt werden kann, wenn die Reffbügel nach unten fahren und der aufgereffte Foliensack auf den Fördergurt auftrifft.

Optional kann vorzugsweise auch eine nachgiebige bzw. federnde Ausgestaltung ohne eine gleitende Abtragung vorgesehen werden. Hierzu können die Reffbügel bzw. das aufgereffte offene Folienende beispielsweise in einem Freiraum zwischen zwei Auflagepunkten des Förderelements, z. B. zwischen zwei Tragrollen, vorgesehen werden. Das Förderelement gibt in diesem Bereich dann je nach Bedarf leicht nach, wenn die untere Lage des geöffneten Foliensacks in Kontakt zu dem Förderelement kommt.

Bevorzugt taucht wenigstens ein Reffbügel wenigstens den gerefften Foliensack in der Verpackungsposition wenigstens abschnittsweise in den durch die Umlenkeinrichtung gebildeten Freiraum ein. Dabei kann insbesondere auch wenigstens ein Reffbügel bzw. können die Reffbügel wenigstens abschnittsweise in den Freiraum eintauchen. Dazu ist der Freiraum vorzugsweise derart ausgebildet, dass sowohl die Reffbügel bzw. wenigstens der aufgereffte Foliensack als auch die Verschlussstation wenigstens abschnittsweise in dem Freiraum aufgenommen werden können.

Besonders bevorzugt umfasst die Umlenkeinrichtung wenigstens in der Förderebene wenigstens eine Umlenkrolle, welche insbesondere einen möglichst geringen Durchmesser aufweist. Bei einer gleitenden Abtragung kann der Gurt vor der Lücke auch über eine sogenannte Messerkante geführt werden, also eine Umlenkung mit besonders kleinem Radius, um die Förderebene möglichst dicht an die Lücke heranzuführen und so nicht biegesteife Objekte wie Säcke möglichst lange zu unterstützen. Bevorzugt ist eine nicht unterstützte Länge kleiner 1/3, besonders bevorzugt kleiner 1/4 der zu verpackenden Objektlänge, um ein Kippen bzw. Hineinbiegen nicht biegesteifer Objekte zu verhindern.

In zweckmäßigen Weiterbildungen ist wenigstens eine Umlenkrolle verfahrbar und/oder verschwenkbar ausgebildet. So kann erreicht werden, dass beispielsweise das Förderelement zwischen die Reffbügel verfahren werden kann, wenn die Reffbügel in der Verpackungsposition angeordnet sind. Dabei wird durch das Verschwenken von wenigstens zwei Umlenkrollen ein Verfahren des Förderelements ermöglicht, ohne eine Längenänderung des Förderelements zu bewirken. So ist es insbesondere auch möglich, dass über das Verfahren von wenigstens zwei Umlenkrollen auch während des Betriebs der Freiraum verändert werden kann, sodass beispielsweise die Verschlussstation beim Abtransport des eingepackten Objekts mitverfahren werden kann, sodass der Foliensack während des Abtransports verschlossen werden kann.

In bevorzugten Weiterbildungen ist in dem Freiraum wenigstens eine Stützeinrichtung angeordnet. Eine derartige Stützeinrichtung kann insbesondere als Stützrolle ausgebildet sein, welche vorzugsweise auch angetrieben ausgebildet sein kann. Eine derartige Stützrolle kann das Objekt bzw. den aufgerefften Foliensack während des Einfahrens des Objekts in den Foliensack abstützen, um eine besonders zuverlässige Befüllung des Sacks zu ermöglichen. Die gereffte Folie wird vorzugsweise über die Stützeinrichtung geführt.

Bevorzugt ist die Stützeinrichtung höhenverstellbar ausgebildet. So kann beispielsweise während des Verpackens des Objekts auch die Höhe der Stützeinrichtung variiert bzw. eingestellt bzw. angepasst werden.

Besonders bevorzugt ist die Verschlussstation verfahrbar ausgebildet. Wie zuvor schon beschrieben, kann man insbesondere in Zusammenspiel mit verfahrbaren Umlenkrollen bzw. mit einem verfahrbaren Förderelement die Verschlussstation verfahren, sodass beispielsweise ein Sack beim Abfördern verschlossen werden kann. So ist es insbesondere möglich, die Horizontalstretchanlage kontinuierlich zu betreiben, ohne dass durch das Verschließen des Sacks ein Start-Stopp-Betrieb notwendig ist.

Bevorzugt ist der Freiraum entsprechend dem Verfahren der Verschlussstation verlagerbar und/oder vergrößerbar und/oder verlängerbar. Wie zuvor schon beschrieben, kann so erreicht werden, dass sich der Freiraum entsprechend den Arbeitsschritten beim Verpacken eines Objekts anpasst, wobei das Objekt jederzeit optimal unterstützt bleibt, sodass die Verschlussstation zum Verschließen des Sacks mitverfahren werden kann, wobei während des Einförderns des Objekts in den Foliensack das Förderelement derart ausgerichtet bzw. der Freiraum derart klein gestaltet ist, dass nahezu ein Lückenschluss in der Förderebene entsteht, wobei lediglich die Verschlussstation in den Freiraum eintauchen kann.

Die erfindungsgemäße Öffnungsstation umfasst wenigstens zwei Arme mit wenigstens einer Transporteinrichtung, wobei die Schlauchfolie aus dem Schlauchfolienvorrat zwischen den beiden Armen durchtransportierbar ist. Je nach Ausgestaltung sind die Arme entsprechend lang ausgebildet, wobei die Arme vorzugsweise wenigstens derart lang ausgebildet sind, dass wenigstens eine gesamte Foliensacklänge zwischen den beiden Armen aufnehmbar ist. Dabei kann die Schlauchfolie bzw. der einseitig geschlossene Foliensack dann beispielsweise mittels angetriebener Rollen zwischen den Armen hindurchgefördert werden.

Je nach Ausrichtung der Horizontalstretchanlage kann beispielsweise in Hochleistungsversionen auch eine längere Öffnungsstation vorgesehen sein, sodass mindestens zwei Sacklängen aufnehmbar sind. Dann kann ein einseitig verschlossener Sack schon auf die Reffbügel aufgerefft werden, während ein nächster Sack in die Öffnungsstation eingezogen und einseitig mittels der Schweiß und Schneidstation verschlossen und vom Folienvorrat abgetrennt wird. Optional kann je nach Ausgestaltung bereits ein zweiter vorgefertigter Sack in die Öffnungsstation eingeführt werden.

Vorzugsweise ist wenigstens eine Saugeinrichtung an wenigstens einem Arm vorgesehen. Insbesondere ist an jedem Arm wenigstens eine Saugeinrichtung bzw. wenigstens ein Sauger vorgesehen. Eine solche Saugeinrichtung ist insbesondere an dem den Reffbügeln zugewandten Ende der Öffnungsstation vorgesehen, wobei mittels der Saugeinrichtung der Foliensack an den Armen festgehalten wird, sodass beispielsweise beim Auseinanderfahren der Arme das offene Ende des Foliensacks auseinandergezogen wird. Dann kann der so geöffnete Foliensack leicht auf die Reffbügel aufgesteckt werden. Bevorzugt ist der untere Teil der Öffnungsstation feststehend als Gleittisch ausgebildet, auf welchem der Foliensack ohne durchzuhängen in Richtung der Saugeinrichtung transportiert und ausgerichtet wird. Der Gleittisch hat bevorzugt in Förderrichtung der Foliensäcke eine Neigung, die dem halben Öffnungswinkel des Sackes in der Öffnungsstation entspricht.

Dazu ist vorzugsweise an wenigstens einem Arm wenigstens eine Verlagerungseinrichtung zum Auseinanderfahren der Arme vorgesehen. Eine solche Verlagerungseinrichtung bzw. ein solcher Aktor kann beliebig ausgestaltet sein, sodass wenigstens ein Arm verlagerbar ist, wodurch der zwischen den Armen angeordnete Foliensack geöffnet wird.

Im einfachsten Fall bestehen die Arme lediglich aus jeweils einem Saugnapf, der in der erforderlichen Breite die obere Folienlage des Foliensacks anhebt und so den Foliensack öffnet. Bevorzugt ist die Öffnungsstation verfahrbar ausgebildet. Dabei kann die Öffnungsstation insbesondere auf die Reffbügel zu- und wieder zurückgefahren werden.

Je nach Ausgestaltung ist es aber auch möglich, dass die Reffbügel verfahrbar sind und sich auf die Öffnungsstation zu bewegen bzw. sich von dieser wieder entfernen. Auch die Schneid- und Schweißstation kann verfahrbar ausgebildet sein, sodass insbesondere bei Hochleistungsversionen der erfindungsgemäßen Horizontalstretchanlage insbesondere durch Überlagerung von Verfahrensschritten ein hoher Durchsatz erreicht werden kann.

Das erfindungsgemäße Verfahren eignet sich zum Verpacken von Objekten in Foliensäcke mittels einer Horizontalstretchanlage, wie sie zuvor beschrieben wurde. Dabei umfasst das Verfahren die folgenden Schritte in geeigneter Reihenfolge:
- Aufreffen des Foliensacks auf die Reffbügel
- Spreizen des Foliensacks mittels der Reffbügel
- Verfahren der Reffbügel in die Verpackungsposition
- Fördern eines Objekts in den Beutel mittels der durchgehenden Fördereinrichtung
- Verschweißen des offenen Endes des gefüllten Sacks mittels der Verschlusseinrichtung.

Vorzugsweise umfasst das erfindungsgemäße Verfahren noch das Einfangen und Einklemmen des offenen Sackendes hinter dem Objekt, wobei anschließend mittels der Verschlussstation der Foliensack zugeschweißt wird.

Die zuvor genannten Verfahrensschritte können in geeigneter Reihenfolge nacheinander und/oder wenigstens teilweise auch gleichzeitig erfolgen. Dabei kann beispielsweise das Zuschweißen des einen Sackendes und das Aufstecken auf die Reffbügel gleichzeitig erfolgen. Zudem kann auch insbesondere das Spreizen des Sacks auf den Reffbügeln und das Verfahren in die Verpackungsposition gleichzeitig erfolgen, bzw. wenigstens teilweise überlagert erfolgen.

Auch das erfindungsgemäße Verfahren bietet die Vorteile, die zuvor schon zu der erfindungsgemäßen Horizontalstretchanlage mit einer durchgehenden Fördereinrichtung beschrieben wurden.

In zweckmäßigen Weiterbildungen umfasst das erfindungsgemäße Verfahren weiterhin die folgenden Schritte an geeigneter Stelle:
- Ablängen von einem vorbestimmten Schlauchfolienabschnitt
- Verschweißen des einen Endes der Schlauchfolie
- Übernahme des Foliensacks mittels der Öffnungsstation auf die Reffbügel in der Sackaufnahmeposition

Alternativ können auch hier statt des Ablängens und Verschweißens von Schlauchfolie vorgefertigte Foliensäcke zugeführt werden.

Bevorzugt wird das Förderelement zwischen die Reffbügel bzw. in die Sacköffnung verfahren, nachdem die Reffbügel in die Verpackungsposition verlagert wurden. Dazu werden insbesondere wenigstens zwei Umlenkrollen der Umlenkeinrichtung verfahren und/oder verschwenkt, sodass sich das Förderelement ohne eine Veränderung der Gesamtlänge des Förderelements zwischen die Reffbügel bzw. in den Foliensack hineinbewegt.

Besonders bevorzugt wird die Verschlussstation nachdem das Objekt die Verpackungsposition wenigstens abschnittsweise und insbesondere größtenteils passiert hat in Förderrichtung mitverlagert, wobei das offene Ende des Foliensacks während des Transports je nach Ausgestaltung eingefaltet und dann abgeklemmt und verschlossen wird. So wird ein kontinuierliches Fördern von Objekten über die durchgehende Fördereinrichtung ermöglicht, wodurch kein Start-Stopp-Betrieb erfolgen muss, da der Foliensack während des Abtransports verschlossen wird. Das Anhalten des Objekts, nachdem es in den Foliensack gefördert wurde, um mittels einer stationären Verschlussstation den Sack zu verschließen, ist nicht notwendig.

Das Mitverfahren der Verschlussstation kann je nach Ausgestaltung oberhalb der Förderebene erfolgen oder in einem durch das Verfahren einer in Förderrichtung hinter den Reffbügeln liegenden Umlenkeinrichtung sich vergrößernden Freiraum in der Förderebene.

Weitere Vorteile und Merkmale der vorliegenden Erfindung ergeben sich aus den Ausführungsbeispielen, die im Folgenden mit Bezug auf die beiliegenden Figuren erläutert werden.

Darin zeigen:
- Figur 1: eine rein schematische Seitenansicht auf ein erstes Ausführungsbeispiel einer anmeldungsgemäßen Horizontalstretchanlage in einer ersten Arbeitsstellung;
- Figur 1a: eine rein schematische Draufsicht auf eine Öffnungsstation und drei Seitenansichten einer Öffnungsstation in unterschiedlichen Stellungen;
- Figur 1b: eine rein schematische Seitenansicht einer Öffnungsstation; Figur 2 eine rein schematische Seitenansicht der anmeldungsgemäßen Horizontalstretchanlage gemäß Figur 1 in einer weiteren Arbeitsstellung;
- Figur 3: eine rein schematische Seitenansicht der anmeldungsgemäßen Horizontalstretchanlage gemäß Figur 1 in einer nächsten Arbeitsstellung;
- Figur 4: eine rein schematische Seitenansicht der anmeldungsgemäßen Horizontalstretchanlage gemäß Figur 1 in einer anderen Arbeitsstellung;
- Figur 5: eine rein schematische Seitenansicht der anmeldungsgemäßen Horizontalstretchanlage gemäß Figur 1 in einer weiteren Arbeitsstellung;
- Figur 6: eine rein schematische Seitenansicht der anmeldungsgemäßen Horizontalstretchanlage gemäß Figur 1 in einer nächsten Arbeitsstellung;
- Figur 7: eine rein schematische Seitenansicht der anmeldungsgemäßen Horizontalstretchanlage gemäß Figur 1 in einer anderen Arbeitsstellung;
- Figur 8: eine rein schematische Seitenansicht der anmeldungsgemäßen Horizontalstretchanlage gemäß Figur 1 in einer weiteren Arbeitsstellung;
- Figur 9: eine rein schematische Seitenansicht auf ein zweites Ausführungsbeispiel einer anmeldungsgemäßen Horizontalstretchanlage in einer ersten Arbeitsstellung;
- Figur 10: eine rein schematische Seitenansicht der anmeldungsgemäßen Horizontalstretchanlage gemäß Figur 9 in einer weiteren Arbeitsstellung; und
- Figur 11: eine rein schematische Seitenansicht der anmeldungsgemäßen Horizontalstretchanlage gemäß Figur 9 in einer nächsten Arbeitsstellung.

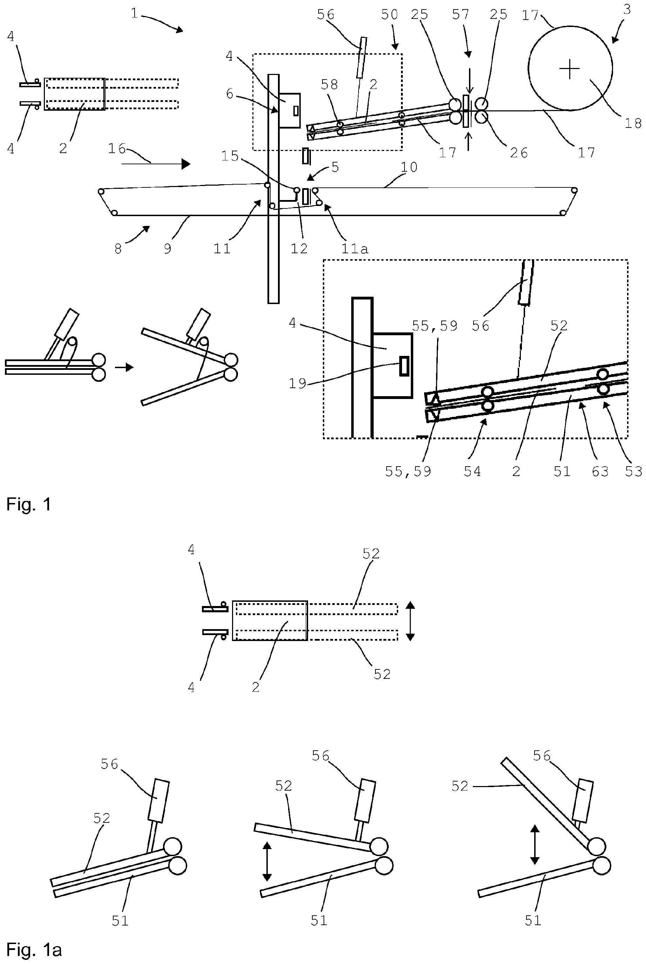

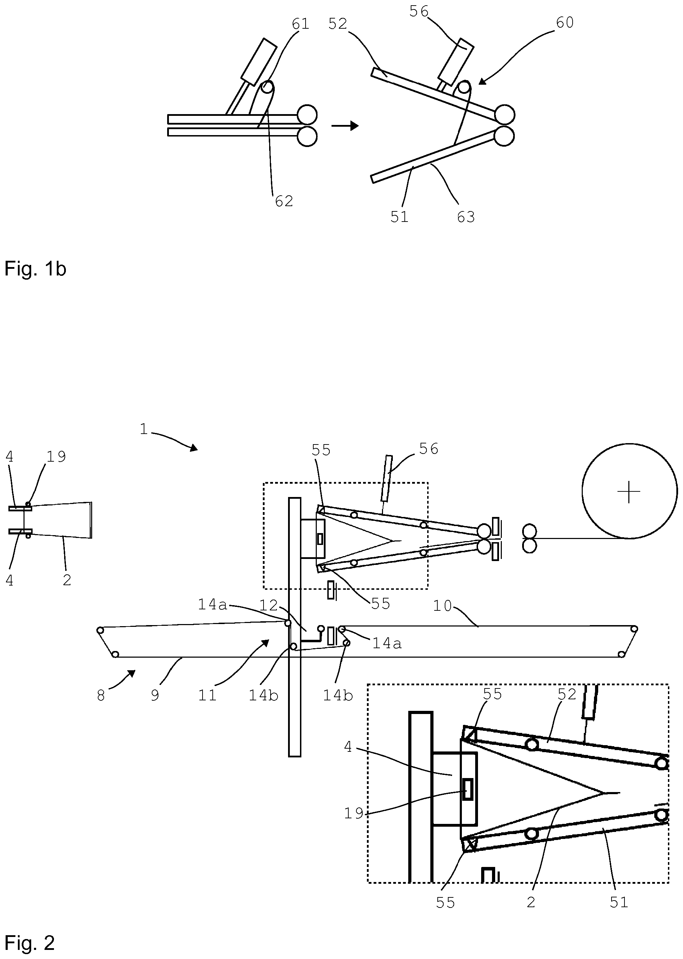

In den Figuren 1 bis 8 ist ein erstes Ausführungsbeispiel einer anmeldungsgemäßen Horizontalstretchanlage 1 und deren Funktionsweise rein schematisch in verschiedenen Ansichten dargestellt.

Die anmeldungsgemäße Horizontalstretchanlage 1 eignet sich zum Umverpacken von Objekten 100 mit Folie bzw. zum Verpacken von Objekten 100 in Foliensäcke, wobei die zu verpackenden Objekte 100 über eine horizontal verlaufende Fördereinrichtung 8 in einen aufgehaltenen Foliensack 2 transportiert, von diesem umhüllt und anschließend abtransportiert werden.

Die Horizontalstretchanlage 1 umfasst dabei einen Schlauchfolienvorrat 3, wobei der Schlauchfolienvorrat 3 Schlauchfolie 17 auf einer Rolle 18 umfasst.

Weiterhin umfasst die Horizontalstretchanlage 1 eine anmeldungsgemäße Öffnungsstation 50, in welche in dem gezeigten Ausführungsbeispiel die Schlauchfolie 17 eingeführt wird.

Der Öffnungsstation 50 ist weiterhin eine Schweiß- und Schneideinrichtung 57 zugeordnet, welche die in die Öffnungseinrichtung 50 eingezogene Schlauchfolie 17 an dem dem Schlauchfolienvorrat 3 zugewandten Ende verschweißt und anschließend vom Schlauchfolienvorrat 3 abtrennt. Hierdurch entsteht ein an drei Seiten geschlossener Foliensack 2, welcher durch die Öffnungseinrichtung 50 hindurch in Richtung der Reffbügel 4 transportiert wird.

In dem gezeigten Ausführungsbeispiel sind der Schweiß- und Schneideinrichtung 57 und der Öffnungsstation 50 jeweils ein Folieneinlauf 25 zugeordnet. Dabei umfassen die Folieneinläufe 25 hier jeweils einen Förderantrieb 26, um die Schlauchfolie 17 der Schweiß- und Schneideinrichtung 57 und der Öffnungsstation zuzuführen.

Die Öffnungsstation 50 umfasst in dem gezeigten Ausführungsbeispiel zwei Arme 51, 52, wobei hier der untere Arm 51 eine als Gleitplatte ausgebildete Stützeinrichtung 63 umfasst bzw. als solche ausgebildet ist. Zwischen den Armen 51, 52 wird die Schlauchfolie 17 bzw. der an einer Seite geschlossene Foliensack 2 hindurch befördert. Durch die Stützeinrichtung 63 kann die durch die Arme 51, 52 geförderte Schlauchfolie 17 nach unten nicht durchhängen.

In dem gezeigten Ausführungsbeispiel sind zwei Transporteinrichtungen 53, 54 vorgesehen, welche hier angetriebene Rollen 58 aufweisen, mittels welcher die Schlauchfolie 17 bzw. der Foliensack 2 in Richtung der Reffbügel 4 zwischen den Armen 51, 52 hindurchgefördert wird.

In der vergrößerten Darstellung in Figur 1 erkennt man, dass an dem den Reffbügeln 4 zugewandten Ende der Öffnungsstation 50 bzw. der Arme 51, 52 Halteeinrichtungen 59 vorgesehen sind, welche hier als Saugeinrichtungen 55 ausgebildet sind, und den Foliensack 2 bzw. die einzelnen Lagen des Foliensackes 2 ansaugen können.

Die Lage des Foliensacks 2 zu den Reffbügeln 4 ist in der linken kleinen Darstellung von oben rein schematisch angedeutet.

In Figur 1a ist rein schematisch in einer Draufsicht und mehreren Seitenansichten dargestellt, wie die Öffnungsstation 50 unterschiedliche Sackmaße verarbeiten kann.

In der Draufsicht ist zu erkennen, dass zwei obere Arme 52 vorgesehen sind, welche je nach Sackbreite unterschiedlich weit auseinander gefahren werden können. So kann auf den Austausch von Formatteilen je nach Sackmaß verzichtet werden. Alternativ kann einer der Arme oder auch beide plattenartig ausgebildet sein, sodass je nach Sackbreite nur ein Abschnitt des Armes verwendet wird.

In den drei Seitenansichten sind unterschiedliche Öffnungswinkel der Arme 51 52 rein schematisch dargestellt. So wird deutlich, dass durch das unterschiedliche Auseinanderfahren der Arme 51, 52 unterschiedliche Sackhöhen verarbeitet werden können.

In Figur 1b ist rein schematisch dargestellt, dass auch beide Arme verlagerbar ausgebildet sein können, wobei hier nur eine Verlagerungseinrichtung 56 bzw. nur ein Aktuator vorgesehen ist.

Der Aktuator 56 ist mit dem oberen Arm 52 verbunden und bewegt diesen hoch und runter. Weiterhin ist eine Umlenkeinrichtung 60 vorgesehen, welche die Bewegung des oberen Arms 52 in eine entgegengesetzte Bewegung des unteren Armes 51 umsetzt.

Die Umlenkeinrichtung 60 kann dabei durch alle bekannten Ausgestaltungen bereitgestellt werden. In dem gezeigten Ausführungsbeispiel ist eine Umlenkrolle 61 vorgesehen, über welche ein flexibles Element 62, hier ein Seil, geführt ist. Das Seil 62 ist dabei mit dem oberen Arm 52 und dem unteren Arm 51 verbunden, sodass eine Bewegung des oberen Arms 52 in eine entsprechend umgekehrte Bewegung des unteren Arms 51 umgesetzt wird. Auch Ausführungen mit Schwenkgestängen oder anderen im Stand der Technik bekannten Verstelleinrichtungen können zweckmäßig eingesetzt werden. Auch Anordnungen mit zwei Antrieben bzw. Aktuatoren sind denkbar.

In Figur 2 ist rein schematisch dargestellt, dass die beiden Arme 51, 52 der Öffnungseinrichtung 50 durch die Verlagerungseinrichtung 56 auseinandergeschwenkt wurden, wobei hier der eine Arm 51 ortsfest und der andere Arm 52 verlagerbar ausgestaltet ist. Dabei ist der eine ortsfeste Arm 51 nach unten geneigt angeordnet, wobei hier bevorzugt ein einstellbarer Winkel von der Hälfte des gewünschten Öffnungswinkels vorgesehen ist. Da die Saugeinrichtungen 55 jeweils eine Lage des einseitig verschlossenen Foliensackes 2 ansaugen, wird dieser geöffnet und ein nahezu rechteckiger Querschnitt gebildet.

Zur Übergabe des Foliensacks 2 auf die Reffbügel 4 wird die Öffnungsstation in Richtung der Reffbügel 4 verfahren, sodass der geöffnete Foliensack 2 über die Reffbügel 4 gesteckt werden kann.

In anderen Ausgestaltungen kann auch die Öffnungsstation 50 ortsfest vorgesehen sein, wobei die Reffbügel 4 dann in Richtung der Öffnungsstation verfahren können, um den geöffneten Foliensack 2 abzuholen. Auch beide Baugruppen können verfahrbar ausgebildet sein.

Je nach Ausgestaltung können insbesondere bei Hochleistungssystemen auch zwei oder mehr vollständige Sacklängen in der Öffnungsstation 50 Platz finden.

In der vergrößerten Darstellung erkennt man, dass der durch die Saugeinrichtungen 55 geöffnete Foliensack 2 über die Reffbügel 4 gestülpt bzw. gesteckt ist, wobei die Reffbügel 4 auf eine beliebige im Stand der Technik bekannte Art und Weise ausgebildet sein können. In dem hier gezeigten Ausführungsbeispiel umfassen die Reffbügel hier jeweils eine angetriebene Rolle 19, wobei in dem gezeigten Ausführungsbeispiel die Drehrichtung angepasst werden kann, sodass die Rollen 19 sowohl beim Aufreffen als auch beim Abreffen unterstützen.

Die Lage des Sackes zu den Reffbügeln 4 ist auch hier in der kleinen Ansicht von oben rein schematisch dargestellt.

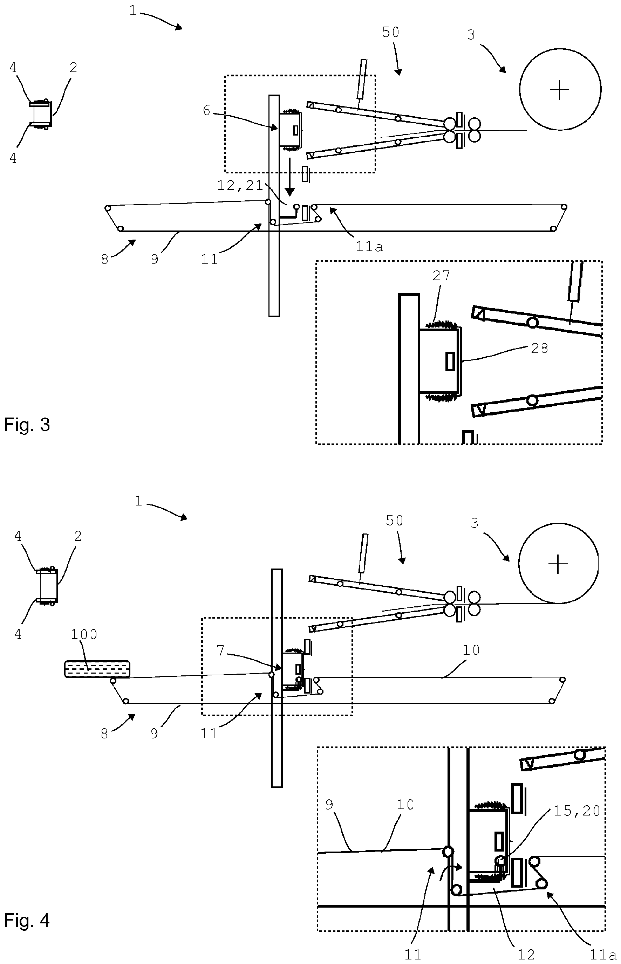

In Figur 3 ist rein schematisch dargestellt, dass der von der Öffnungsstation 50 aufgehaltene Sack vollständig auf die Reffbügel 4 aufgerefft wurde. Dies ist insbesondere auch in der vergrößerten Ansicht und in der kleinen Ansicht von oben zu erkennen.

In der Vergrößerung ist zudem noch einmal gut die auf die Reffbügel 4 aufgereffte Folie 27 zu erkennen, wobei die Schweißnaht 28 des Foliensacks 2, welche von der Schweiß- und Schneidstation 57 eingebracht wurde, in der hier gezeigten Ausführungsform in etwa zentral der Öffnung des Sacks gegenüberliegt.

In Figur 4 erkennt man in der Ansicht von oben im Vergleich zu der Ansicht gemäß Figur 3, dass die Reffbügel leicht auseinandergefahren sind, um den aufgerefften Foliensack 2 leicht zu stretchen.

In Figur 4 ist weiterhin zu sehen, dass der auf die Reffbügel aufgezogene Foliensack 2 mit den Reffbügeln 4 in die Verpackungsposition 7 in dem hier gezeigten Ausführungsbeispiel nach unten verfahren ist. Auf der linken Seite der Fördereinrichtung 8 erkennt man, dass ein zu verpackendes Objekt 100 in Förderrichtung 16 auf die Reffbügel 4 zu transportiert wird.

Bei der anmeldungsgemäßen Horizontalstretchanlage 1 ist im Gegensatz zu den sonst bekannten Anlagen nur eine einzige Fördereinrichtung 8 vorgesehen, welche das zu verpackende Objekt 100 sowohl den Reffbügeln 4 zuführt, als es auch nach der Verpackung abtransportiert.

Damit die Reffbügel 4 den Foliensack 2 in eine geeignete Verpackungsposition 7 in die Förderebene 10 der Fördereinrichtung 8 bringen können und damit auch die unteren Komponenten bzw. die untere Baugruppe der Verschlussstation 5 unterhalb der Förderebene 10 angeordnet werden kann, ist anmeldungsgemäß das Förderelement 9 mittels zweier Umlenkeinrichtungen 11, 11a im Bereich der Reffbügel 4 und der Verschlussstation 5 umgelenkt, wodurch das Förderelement 9 nach unterhalb der Förderebene 10 umgelenkt wird und so ein Freiraum 12 bzw. eine Lücke 21 in der Förderebene 10 gebildet wird.

Damit der Foliensack 2 auch dann in diesem Freiraum 12 ausreichend gestützt ist, wenn das Objekt 100 durch den Foliensack 2 transportiert wird, ist in dem hier gezeigten Ausführungsbeispiel in dem Freiraum 12 eine Stützeinrichtung 15 vorgesehen, welche hier als Stützrolle 20 ausgebildet ist, über welche die Folie gezogen wird. Eine solche Stützrolle 20 kann je nach Bedarf auch angetrieben ausgestaltet sein.

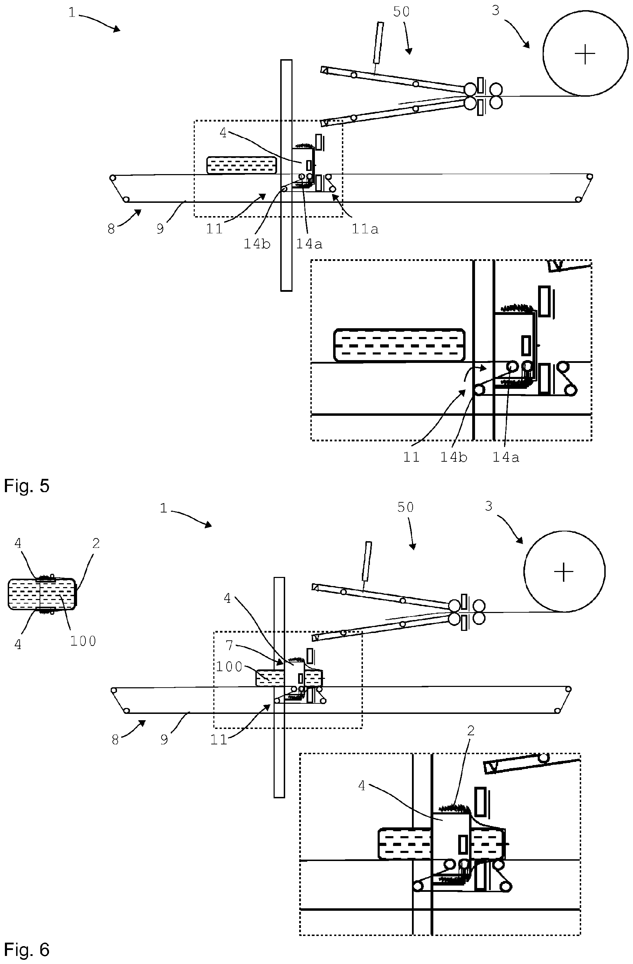

In Figur 5 ist rein schematisch dargestellt, dass das Förderelement 9 zwischen die Reffbügel 4 bzw. nach innerhalb des Foliensacks 2 verlagert werden kann, wenn die Reffbügel 4 in die Verpackungsposition 7 verlagert sind.

So kommt es nahezu zu einem Lückenschluss in der Förderebene, sodass ein zu verpackendes insbesondere nicht biegesteifes Objekt 100 sicher in den Sack 2 und durch die Verpackungsposition 7 transportiert werden kann.

Dies erfolgt dadurch, dass die Umlenkeinrichtung 11 in dem gezeigten Ausführungsbeispiel eine obere Umlenkrolle 14a und eine untere Umlenkrolle 14b umfasst, welche hier gemeinsam verschwenkbar ausgestaltet sind. Durch das Verfahren bzw. Verschwenken der Umlenkrollen 14a, 14b der Umlenkeinrichtung 11 kann die Lücke 21 in der Förderebene 10 variiert werden. Dadurch verfährt in dem hier gezeigten Ausführungsbeispiel das Förderelement 9 wie zuvor beschrieben zwischen die Reffbügel 4, sobald die Reffbügel mit dem Sack 2 nach unten in die Verpackungsposition 7 abgesenkt sind.

Allgemein ist vorgesehen, dass die Umlenkeinrichtungen 11, 11a obere und untere Umlenkrollen 14a, 14b umfassen, wobei jeweils zumindest die oberen Umlenkrollen 14a einen möglichst kleinen Durchmesser aufweisen oder diese Umlenkung als Messerkante ausgebildet ist. So kann eine besonders kleine Lücke 21 erreicht werden, da besonders kleine Umlenkradien vorliegen.

In Figur 6 sieht man, dass das Objekt 100 mittels der Fördereinrichtung 8 bzw. auf dem Förderelement 9 durch von den Reffbügeln 4 aufgehaltenen Foliensack 2 gefördert wird. Durch das Hindurchfördern des Objekts 100 durch den aufgerefften Foliensack 2 wird der Sack 2 durch die Förderleistung von den Reffbügeln 4 abgezogen und legt sich um das Objekt 100. In dem hier gezeigten Ausführungsbeispiel wird das Abreffen bzw. das Herunterziehen des Foliensacks 2 von den Reffbügeln 4 durch die angetriebenen Rollen 19 an den Reffbügeln 4 definiert geführt, um eine vorzugsweise definierte Zugspannung auch in Förderrichtung in die Folie einzubringen.

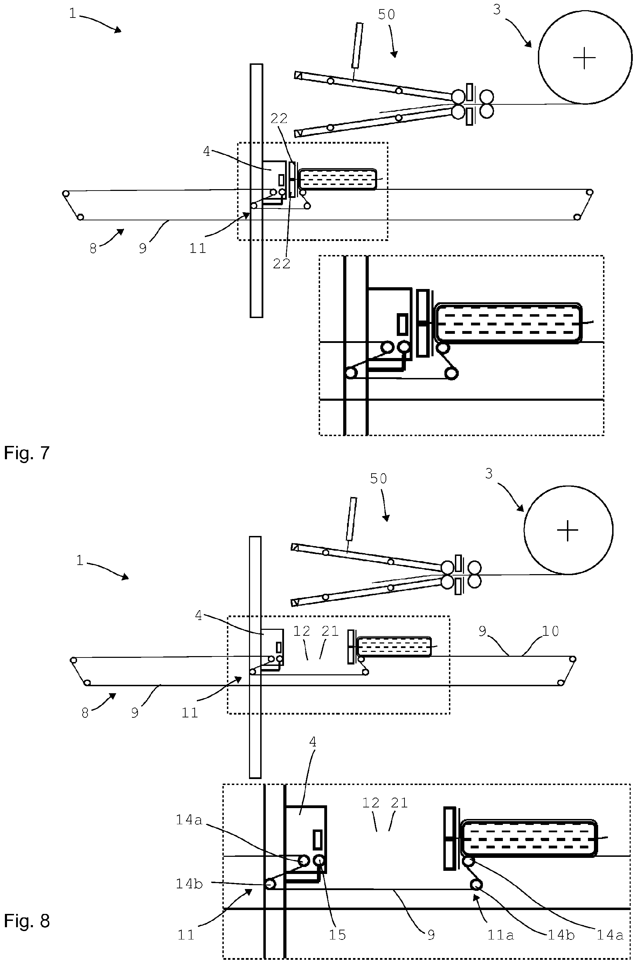

In Figur 7 erkennt man, dass die Klemm- und Schweißeinrichtung 22 der Verschlussstation 5 zusammengefahren sind, wodurch das offene Ende des Foliensacks 2 sozusagen eingefangen und zusammengeklemmt wird. Die Schweißeinrichtung der Verpackungsstation 5 verschließt den Foliensack 2 an dem offenen Ende, sodass ein vollständig eingepacktes bzw. eingeschweißtes Objekt 100 vorliegt. Um insbesondere bei der Verwendung von Seitenfaltenfolie eine definierte Verschweißung zu gewährleisten, können je nach Ausgestaltung nicht näher dargestellte Seitenfalteneinleger vorgesehen sein, welche die Seitenfalten vor dem Einklemmen und Verschweißen zurücklegen.

In Figur 8 ist ein Arbeitsschritt rein schematisch dargestellt, welcher alternativ oder zusätzlich zu dem Arbeitsschritt gemäß Figur 7 erfolgen kann.

In dieser Ausgestaltung ist gezeigt, dass der Foliensack 2 nicht in einem Start-Stopp-Betrieb verschlossen wird. Hier wird der Sack 2 während des Abtransports auf dem Förderelement 9 durch die zusammen mit dem Förderelement 9 verfahrene Verschlussstation 5 verschweißt und geschlossen wird.

Dies erfolgt dadurch, dass auch hier das Förderelement 9 durch das gemeinsame Verfahren der oberen Umlenkrollen 14a und der unteren Umlenkrolle 14b der Umlenkeinrichtung 11a den Freiraum 12 bzw. die Lücke 21 in der Förderebene 10 verlagert bzw. verlängert, sodass die hier verfahrbar ausgestaltete Verschlussstation 5 zusammen mit dem Sack 2 verfahren bzw. weggefördert werden kann. Nachdem der Sack 2 verschweißt ist, kann die Verschlussstation 5 zurück in Richtung der Reffbügel 4 verlagert werden. Durch das gemeinsame Verfahren der oberen und der unteren Umlenkrolle 14a, 14b kann die Lücke 21 ohne eine Längenänderung des Förderelements 9 variiert werden.

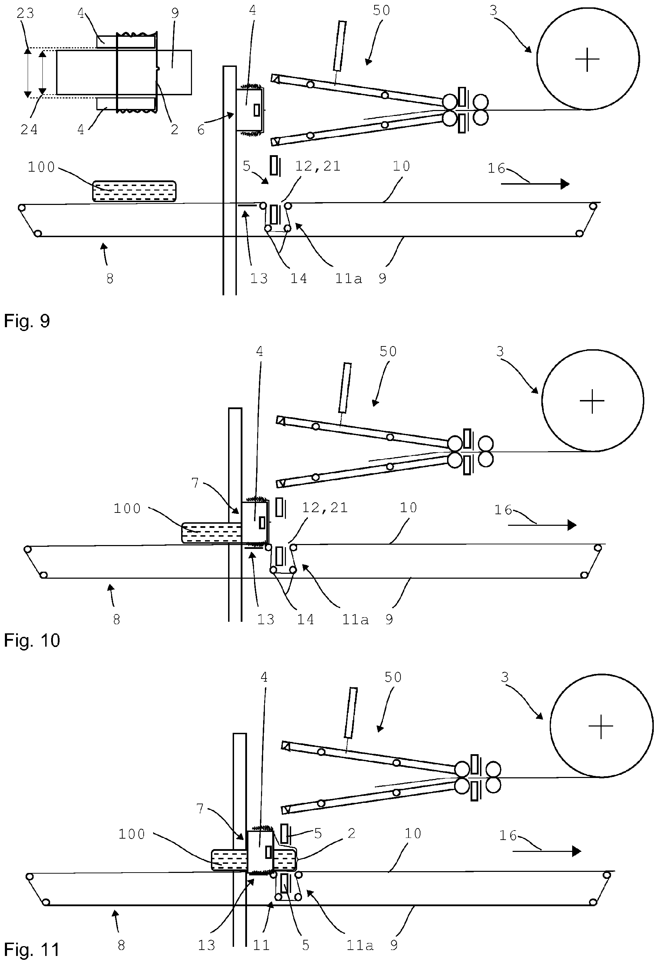

In den Figuren 9 bis 11 ist ein weiteres Ausführungsbeispiel einer anmeldungsgemäßen Horizontalstretchanlage 1 rein schematisch dargestellt. In dem gezeigten Ausführungsbeispiel umfasst die Horizontalstretchanlage 1 auch eine einzige durchgehende Fördereinrichtung 8 mit einem Förderelement 9.

Auch in diesem Ausführungsbeispiel ist in der Förderebene 10 ein Freiraum 12 bzw. eine Lücke 21 mittels einer Umlenkeinrichtung 11 gebildet. Dabei wird der Freiraum durch Umlenkrollen 14 bereitgestellt, welche das Förderelement 9 nach unten aus der Förderebene 10 umleiten.

Die allgemeine Funktionsweise der hier gezeigten Horizontalstretchanlage 1 entspricht der Funktionsweise der schon zuvor beschriebenen Horizontalstretchanlage 1. Im Gegensatz zu der zuvor beschriebenen Anlage ist bei der hier gezeigten Horizontalstretchanlage 1 jedoch der Freiraum 12 nur im Bereich der Verschlussstation 5 vorgesehen.

Hierdurch wird es möglich, dass der untere Teil bzw. die untere Baugruppe der Verschlussstation 5 nach unterhalb der Förderebene 10 verlagert wird, sodass ein zu verpackendes Objekt 100 beim Eintransportieren in den Foliensack 2 über den unteren Teil der Verschlussstation 5 bzw. durch die Verschlussstation 5 hindurch transportiert werden kann.

Damit der Foliensack 2 mittels der Reffbügel 4 in eine geeignete Verpackungsposition 7 verfahren werden kann, ist in dem gezeigten Ausführungsbeispiel der horizontale Abstand 23 zwischen den Reffbügeln 4 größer als die Breite 24 des Förderelements 9. So können die Reffbügel 4 ein wenig an dem Förderelement 9 bzw. bis unterhalb der Förderebene 10 fahren, sodass der von dem Reffbügeln 4 gehaltene Foliensack 2 sogar über das Förderelement 9 leicht gespannt werden kann. Dies ist insbesondere in der linken Abbildung oben in einer Draufsicht rein schematisch dargestellt.

Dadurch wird erreicht, dass die Lücke 21 in der Förderebene nur noch die untere Baugruppe der Verschlussstation 5 aufnehmen können muss, wodurch eine besonders kurze Lücke 21 bzw. ein besonders kurzer Freiraum 12 möglich wird.

Zusätzlich ist in dem hier gezeigten Ausführungsbeispiel eine gleitende Abtragung 13 im Bereich der Reffbügel 4 an der Fördereinrichtung 8 vorgesehen. Diese gleitende Abtragung 13 führt dazu, insbesondere wenn diese federnd unter dem Förderelement gelagert ist, dass das Objekt 100 sicher in den Foliensack 2 eingefördert wird.

Alternativ kann die Fördereinrichtung 8 bzw. das Förderelement 9 in dem Bereich der Reffbügel 4 bzw. des aufliegenden Foliensacks 2 leicht nachgeben, sodass dann ein Objekt 100 mittels des Förderelements 9 optimal in den von den Reffbügeln 4 aufgehaltenen Sack hinein gefördert werden kann.

### Bezugszeichenliste:

| | | | |
|---|---|---|---|
| 1 | Horizontalstretchanlage | 56 | Verlagerungseinrichtung |
| 2 | Foliensack | 57 | Schweiß- und |
| 3 | Schlauchfolienvorrat | | Schneidstation |
| 4 | Reffbügel | 58 | Rollen |
| 5 | Verschlussstation | 59 | Halteeinrichtung |
| 6 | Sackaufnahmeposition | 60 | Umlenkeinrichtung |
| 7 | Verpackungsposition | 61 | Umlenkrolle |
| 8 | Fördereinrichtung | 62 | flexibles Element |
| 9 | Förderelement | 63 | Stützeinrichtung |
| 10 | Förderebene | 100 | Objekt |
| 11 | Umlenkeinrichtung | | |
| 11a | Umlenkeinrichtung | | |
| 12 | Freiraum | | |
| 13 | gleitende Abtragung | | |
| 14 | Umlenkrolle | | |
| 14a | obere Umlenkrolle | | |
| 14b | untere Umlenkrolle | | |
| 15 | Stützeinrichtung | | |
| 16 | Förderrichtung | | |
| 17 | Schlauchfolie | | |
| 18 | Rolle | | |
| 19 | Rolle | | |
| 20 | Stützrolle | | |
| 21 | Lücke | | |
| 22 | Klemm- und Schweißstation | | |
| 23 | Abstand Reffbügel | | |
| 24 | Breite des Förderelements | | |
| 25 | Folieneinlauf | | |
| 26 | Förderantrieb | | |
| 27 | aufgereffte Folie | | |
| 28 | Schweißnaht | | |
| 50 | Öffnungsstation | | |
| 51 | Arm | | |
| 52 | Arm | | |
| 53 | Transporteinrichtung | | |
| 54 | Transporteinrichtung | | |
| 55 | Saugeinrichtung | | |

## Patentansprüche

1. Horizontalstretchanlage (1) zum Verpacken von wenigstens einem Objekt (100) in einen Foliensack (2) umfassend wenigstens einen Schlauchfolienvorrat (3), wenigstens eine Öffnungsstation (50), wenigstens zwei Reffbügel (4) zum Aufreffen und spreizen des Foliensacks (2) und wenigstens eine Verschlussstation (5) zum Verschließen des gefüllten Foliensacks (2), wobei die Reffbügel (4) zwischen einer Sackaufnahmeposition (6) und einer Verpackungsposition (7) verfahrbar sind,
**dadurch gekennzeichnet,**
**dass** eine durchgehende Fördereinrichtung (8) mit wenigstens einem Förderelement (9) vorgesehen ist, auf welcher ein zu verpackendes Objekt (100) in den durch die Reffbügel (4) in der Verpackungsposition (7) aufgehaltenen Foliensack (2) hindurchtransportiert wird, wobei die Fördereinrichtung (8) eine Förderebene (10) umfasst und wobei wenigstens eine Umlenkeinrichtung (11, 11a) vorgesehen ist, welche das Förderelement (9) wenigstens abschnittsweise nach unten aus der Förderebene (10) umlenkt, sodass ein Freiraum (12) in der Förderebene (10) gebildet ist, in welchem wenigstens die Verschlussstation (5) wenigstens abschnittsweise anordenbar ist.

2. Vorrichtung nach Anspruch 1, wobei der horizontale Abstand (23) der Reffbügel (4) größer als die Breite (24) des Förderelements (9) ist.

3. Vorrichtung nach einem der vorhergehenden Ansprüche, wobei die Fördereinrichtung (8) im Bereich der Reffbügel (4) eine gleitende Abtragung (13) aufweist.

4. Vorrichtung nach einem der vorhergehenden Ansprüche, wobei das Förderelement (9) im Bereich der Reffbügel und/oder die gleitende Abtragung (13) im Wesentlichen nachgiebig und/oder federnd gelagert ist.

5. Vorrichtung nach einem der vorhergehenden Ansprüche, wobei der wenigstens eine Reffbügel (4) den gerefften Foliensack in der Verpackungsposition (7) wenigsten abschnittsweise in den durch die Umlenkeinrichtung (11, 11a) gebildeten Freiraum (12) eintaucht.

6. Vorrichtung nach einem der vorhergehenden Ansprüche, wobei die Umlenkeinrichtung (11, 11a) wenigstens eine Umlenkrolle (14) umfasst, wobei bevorzugt die wenigstens eine Umlenkrolle (14) verfahrbar und/oder verschwenkbar ist.

7. Vorrichtung nach einem der vorhergehenden Ansprüche, wobei in dem Freiraum (12) wenigstens eine Stützeinrichtung (15) angeordnet ist, wobei vorzugsweise die Stützeinrichtung (15) höhenverstellbar ausgebildet ist.

8. Vorrichtung nach einem der vorhergehenden Ansprüche, wobei die Verschlussstation (5) verfahrbar ausgebildet ist, wobei bevorzugt der Freiraum (12) entsprechend dem Verfahren der Verschlussstation (5) verlagerbar und/oder vergrößerbar ist.

9. Vorrichtung nach einem der vorhergehenden Ansprüche, wobei die Öffnungsstation (50) wenigstens zwei Arme (51, 52) mit wenigstens einer Transporteinrichtung (53, 54) umfasst, wobei die Schlauchfolie aus dem Schlauchfolienvorrat (3) zwischen den beiden Armen (51, 52) hindurchtransportierbar ist, wobei vorzugsweise an wenigstens einem Arm (51, 52) wenigstens eine Saugeinrichtung (55) vorgesehen ist.

10. Vorrichtung nach dem vorhergehenden Anspruch, wobei an wenigstens einem Arm (51, 52) wenigstens eine Verlagerungseinrichtung (56) zum Auseinanderfahren der Arme (51, 52) vorgesehen ist und/oder wobei die Öffnungsstation (50) verfahrbar ausgestaltet ist.

11. Verfahren zum Verpacken von Objekten in Foliensäcke mittels einer Horizontalstretchanlage (1) nach einem der vorhergehenden Ansprüche,
**gekennzeichnet durch** die folgenden Schritte in geeigneter Reihenfolge:
- Aufreffen eines Foliensacks (2) auf die Reffbügel (4)
- Spreizen des Foliensacks (2) mittels der Reffbügel (4)
- Verfahren der Reffbügel (4) in die Verpackungsposition (7)
- Fördern eines Objekts (100) in den Beutel mittels der durchgehenden Fördereinrichtung
- Verschweißen des offenen Endes des gefüllten Foliensacks (2) mittels der Verschlussstation (5).

12. Verfahren nach dem vorhergehenden Anspruch, umfassend wenigstens einen der folgenden zusätzlichen Schritte an geeigneter Stelle:
- Ablängen von einem vorbestimmten Schlauchfolienabschnitt
- Verschweißen des einen Endes der Schlauchfolie und/oder
- Übernahme des Foliensacks (2) mittels der Öffnungsstation auf die Reffbügel (4) in der Sackaufnahmeposition (6)

13. Verfahren nach einem der zwei vorhergehenden Ansprüche, **dadurch gekennzeichnet, dass** Schritte parallel und/oder wenigstens abschnittsweise überlagert durchgeführt werden.

14. Verfahren nach einem der vorhergehenden Ansprüche 12 oder 13, **dadurch gekennzeichnet, dass** das Förderelement (10) zwischen die Reffbügel (4) verfahren wird, nachdem die Reffbügel (4) in die Verpackungsposition (7) verlagert wurden.

15. Verfahren nach einem der vorhergehenden Ansprüche 12 bis 14, wobei die Verschlussstation (5) in Förderrichtung (16) mitverlagert wird und dass der Foliensack (2) während des Transports verschlossen wird.

## Claims

1. Horizontal stretch system (1) for packaging at least one object (100) into a plastic bag (2), comprising at least one tubular sheet supply (3), at least one opening station (50), at least two gathering brackets (4) for gathering and spreading the plastic bag (2), and at least one closing station (5) for closing the filled plastic bag (2), wherein the gathering brackets (4) are traversable between a bag takeup position (6) and a packaging position (7),
**characterized in**
**that** a continuous conveyor device (8) having at least one conveying member (9) is provided on which an object (100) intended for packaging is transported through into the plastic bag (2) kept open by the gathering brackets (4) in the packaging position (7), wherein the conveyor device (8) comprises a conveying plane (10), and wherein at least one deflecting device (11, 11a) is provided which deflects the conveying member (9) downwardly from the conveying plane (10), at least in sections, so as to form a free space (12) in the conveying plane (10), in which at least the closing station (5) can be disposed at least in sections.

2. The apparatus according to claim 1, wherein the horizontal distance (23) of the gathering brackets (4) is larger than the width (24) of the conveying member (9).

3. The apparatus according to any of the preceding claims, wherein the conveyor device (8) includes a sliding discharge (13) in the region of the gathering brackets (4).

4. The apparatus according to any of the preceding claims, wherein in the region of the gathering brackets and/or the sliding discharge (13), the conveying member (9) is substantially supported yielding and/or sprung.

5. The apparatus according to any of the preceding claims, wherein the at least one gathering bracket (4) dips the gathered plastic bag in the packaging position (7), at least in sections, into the free space (12) formed by the deflecting device (11, 11a).

6. The apparatus according to any of the preceding claims, wherein the deflecting device (11, 11a) comprises at least one deflection roller (14), wherein the at least one deflection roller (14) is traversable and/or pivotable.

7. The apparatus according to any of the preceding claims, wherein at least one supporting device (15) is disposed in the free space (12), wherein the supporting device (15) is preferably height-adjustable.

8. The apparatus according to any of the preceding claims, wherein the closing station (5) is traversable, wherein the free space (12) can preferably be displaced and/or enlarged in correspondence with traversal of the closing station (5).

9. The apparatus according to any of the preceding claims, wherein the opening station (50) comprises at least two arms (51, 52) with at least one conveying device (53, 54), wherein the tubular sheet can be transported from the tubular sheet supply (3) between the two arms (51, 52), wherein preferably, at least one arm (51, 52) is provided with at least one suction device (55).

10. The apparatus according to the preceding claim, wherein at least one arm (51, 52) is provided with at least one displacement device (56) for spreading the arms (51, 52) apart, and/or wherein the opening station (50) is traversable.

11. Method of packaging objects into plastic bags by means of a horizontal stretch system (1) according to any of the preceding claims,
**characterized by** the following steps in a suitable sequence:
- gathering a plastic bag (2) onto the gathering brackets (4)
- spreading the plastic bag (2) by means of the gathering brackets (4)
- traversing the gathering brackets (4) to the packaging position (7)
- conveying an object (100) into the bag by means of the continuous conveyor device
- welding shut the open end of the filled plastic bag (2) by means of the closing station (5).

12. The method according to the preceding claim, comprising at least one of the following additional steps in a suitable position:
- cutting a tubular sheet section to a specified length
- welding shut one end of the tubular sheet
and/or
- taking over the plastic bag (2) by means of the opening station onto the gathering brackets (4) in the bag takeup position (6).

13. The method according to any of the two preceding claims, **characterized in that** steps are performed in parallel and/or overlapping at least in sections.

14. The method according to any of the preceding claims 12 or 13, **characterized in that** the conveying member (10) is traversed between the gathering brackets (4) after displacement of the gathering brackets (4) to the packaging position (7).

15. The method according to any of the preceding claims 12 to 14,
wherein the closing station (5) is displaced along in the conveying direction (16), and that the plastic bag (2) is closed during the transport.

## Revendications

1. Installation d'étirage horizontal (1) destinée à emballer au moins un objet (100) dans un sac en film (2), comprenant au moins une réserve de film tubulaire (3), au moins un poste d'ouverture (50), au moins deux branches de ris (4) pour enfiler et écarter le sac en film (2) et au moins un poste de fermeture (5) pour fermer le sac en film (2) rempli, dans lequel lesdites branches de ris (4) peuvent être déplacées entre une position de réception de sac (6) et une position d'emballage (7),
**caractérisée par le fait**
**qu'**un dispositif de transport (8) continu ayant au moins un élément de transport (9) est prévu, sur lequel un objet (100) à emballer est transporté dans et à travers le sac en film (2) maintenu ouvert dans la position d'emballage (7) par les branches de ris (4), dans lequel le dispositif de transport (8) comprend un plan de transport (10) et dans lequel au moins un dispositif de déviation (11, 11a) est prévu qui dévie l'élément de transport (9), au moins par sections, vers le bas hors du plan de transport (10) de sorte qu'un espace libre (12) est formé dans le plan de transport (10), dans lequel au moins le poste de fermeture (5) peut être agencé au moins par sections.

2. Dispositif selon la revendication 1, dans lequel la distance horizontale (23) des branches de ris (4) est supérieure à la largeur (24) de l'élément de transport (9).

3. Dispositif selon l'une quelconque des revendications précédentes, dans lequel le dispositif de transport (8) présente un support glissant (13) au niveau des branches de ris (4).

4. Dispositif selon l'une quelconque des revendications précédentes, dans lequel ledit élément de transport (9) au niveau des branches de ris et/ou ledit support glissant (13) est logé pour l'essentiel de manière souple et/ou élastique.

5. Dispositif selon l'une quelconque des revendications précédentes, dans lequel ladite au moins une branche de ris (4) plonge le sac en film enfilé, dans la position d'emballage (7), au moins par sections dans l'espace libre (12) formé par le dispositif de déviation (11, 11a).

6. Dispositif selon l'une quelconque des revendications précédentes, dans lequel le dispositif de déviation (11, 11a) comprend au moins une poulie de renvoi (14), dans lequel, de préférence, ladite au moins une poulie de renvoi (14) peut être déplacée et/ou pivotée.

7. Dispositif selon l'une quelconque des revendications précédentes, dans lequel au moins un dispositif de support (15) est agencé dans l'espace libre (12), dans lequel, de préférence, ledit dispositif de support (15) est conçu de manière à être réglable en hauteur.

8. Dispositif selon l'une quelconque des revendications précédentes, dans lequel le poste de fermeture (5) est conçu de manière à être déplaçable, dans lequel, de préférence, l'espace libre (12) peut être déplacé et/ou agrandi selon le déplacement du poste de fermeture (5).

9. Dispositif selon l'une quelconque des revendications précédentes, dans lequel le poste d'ouverture (50) comprend au moins deux bras (51, 52) avec au moins un dispositif de transport (53, 54), dans lequel le film tubulaire provenant de la réserve de film tubulaire (3) peut être transporté en passant entre les deux bras (51, 52), dans lequel, de préférence, au moins un dispositif d'aspiration (55) est prévu sur au moins un bras (51, 52).

10. Dispositif selon la revendication précédente, dans lequel au moins un dispositif de déplacement (56) destiné à écarter les bras (51, 52) est prévu sur au moins un bras (51, 52), et/ou dans lequel le poste d'ouverture (50) est conçu de manière à être déplaçable.

11. Procédé d'emballage d'objets dans des sacs en film au moyen d'une installation d'étirage horizontal (1) selon l'une quelconque des revendications précédentes, **caractérisé par les étapes suivantes dans l'ordre approprié:**
- enfiler un sac en film (2) sur les branches de ris (4)
- écarter le sac en film (2) au moyen des branches de ris (4)
- déplacer les branches de ris (4) dans la position d'emballage (7)
- transporter un objet (100) dans le sac au moyen du dispositif de transport continu
- souder l'extrémité ouverte du sac en film (2) rempli, au moyen du poste de fermeture (5).

12. Procédé selon la revendication précédente, comprenant au moins l'une des étapes supplémentaires suivantes sur un point approprié:
- couper à longueur un tronçon de film tubulaire prédéterminé
- souder ladite une extrémité du film tubulaire
et/ou
- reprendre le sac en film (2) au moyen du poste d'ouverture sur les branches de ris (4) dans la position de réception de sac (6)

13. Procédé selon l'une quelconque des deux revendications précédentes, **caractérisé par le fait que** les étapes sont réalisées en parallèle et/ou en étant superposées au moins par sections.

14. Procédé selon l'une quelconque des revendications 12 ou 13 précédentes, **caractérisé par le fait que** l'élément de transport (10) est déplacé entre les branches de ris (4) après que les branches de ris (4) ont été déplacées dans la position d'emballage (7).

15. Procédé selon l'une quelconque des revendications 12 à 14 précédentes, dans lequel le poste de fermeture (5) est déplacé lui aussi dans la direction de transport (16) et que le sac en film (2) est fermé pendant le transport.
